# EUROPEAN PATENT APPLICATION

(11) **EP 3 542 630 A1**
(43) Date of publication of application: **25.09.2019**
(21) Application number: 18162806.6
(22) Date of filing: 20.03.2018
(51) Int. Cl.: A01N 59/04, A01N 65/08, A01N 65/36, A01N 65/24, A01N 65/22, A01N 65/10, A01N 65/34, A01N 65/44, A01N 65/42, A01P 7/04

(54) **PESTICIDAL COMPOSITIONS FOR PEST CONTROL**

(71) Applicant: University of Graz, 8010 Graz (AT)
(72) Inventor: Hartbauer, Manfred, 8563 Ligist (AT); Abdelatti, Zainab, 8010 Graz (AT)
(74) Representative: Patentanwaltskanzlei Matschnig & Forsthuber OG

(57) **Abstract**

The present invention relates to a pesticidal composition comprises: a.) a carrier oil component selected from the group consisting of linseed oil, oils extracted or distilled from chia (*Salvia hispanica*), kiwifruit seeds (*Actinidia chinensis*), perilla (*Perilla frutescens*), lingonberry (*Vaccinium vitis-idaea*), camelina (*Camelina sativa*), purslane (*Portulaca oleracea*), sea buckthorn, walnut, rapeseed, soybean and hemp, and mixtures of the aforementioned oils, b.) an aqueous solution of hydrogencarbonate, and c.) a plant essential oil component selected from the group consisting of orange peel oil, mandarin peel oil, mint oil, spearmint oil (*Mentha spicata*), kuromoji oil, ginger grass oil, wintergreen oil, birch oil, black birch oil (*Betulenta lenta*), Spiraea (meadowsweets) oil Polygalaceae oil, hemp seed oil, caraway oil, garden angelica oil (*Angelica archangelica*), lovage extracts, dill seed oil and mixtures thereof. The present invention further relates to the use of said composition for controlling insects from the order Orthoptera and to methods for controlling insects from the order Orthoptera. The present invention also relates to a kit for an on-site preparation of a sprayable pesticidal composition and the use of said sprayable composition for controlling insects from the order Orthoptera.

## Description

The present invention relates to a novel pesticidal composition comprising plant oils (vegetable oils), the use of said composition for controlling insects from the order Orthoptera and to methods for controlling insects from the order Orthoptera, in particular for controlling gregarious locusts.

The present invention further relates to a kit for an on-site preparation of a sprayable pesticidal composition and the use of said sprayable composition for controlling insects from the order Orthoptera, in particular for controlling gregarious locusts.

Pests in the form of invertebrates, insects, arachnids, larvae thereof, etc. cause problems for humans for a myriad of reasons. Humans spend billions of dollars in crop losses and in the expense of keeping pests under control (e.g., Pimentel 2005;). For example, the losses caused by pests in agricultural environments include decreased crop yield, reduced crop quality, and increased harvesting costs are annoying to humans for several reasons. Invertebrate pests feed on plants or cause damage to plants in other ways because some pests can spread disease as disease vectors. The pathogenic organisms that cause economic loss of plant crops include fungi, insects, arachnids, gastropods, nematodes and the like. Major insect pests include swarming locusts, aphids, cockroaches, termites and ants. These and other pests have annually cost humans billions of dollars in crop losses in the case of agricultural pests and in the expense of keeping them under control. During outbreaks, gregarious locusts may spread over an enormous area, in particular in Africa, the Near East, Middle East, Far East, South-West Asia, North and South America and Australia (see Cressman, Monitoring desert locusts in the Middle East: An overview; http://iea-archive.uoregon.edu/indicators/Agriculture.DesertLocustPlagues.MiddleEast.Pages127-128.pdf). Swarms of locusts have the potential to damage the livelihood of a tenth of the world's population (see desert locust information service: http://www.fao.org/ag/locusts/oldsite/LOCFAQ.htm#q3; and Cressman).

There is a big variety of pesticides for controlling insects, hereinafter also referred to as "insecticides", in the prior art. Most pesticides for controlling insects, that are known in the art, kill by their detrimental effect on the insect's nervous system. These prior art pesticidal formulations typically include active ingredients that are often highly toxic to humans and/or animals and can damage the environment if not used properly (see_FAO publication "Pesticide application techniques in west Africa": http://www.fao.org/docrep/x5858e/x5858e00.htm#P249_20075). Consequently, the prior art formulations must be used with care at low concentrations, which decreases their toxic effects, but at the same time also its potency. Another problem with prior art insecticides is that insects frequently develop resistance or immunity to the insecticide. Due to rather short generation times of most insects and the biochemical mechanisms underlying insecticidal function, many prior art insecticides are effective initially, but lose their effectiveness overtime. Therefore, the ideal insecticide should have the following characteristics: low toxicity to non-target organisms; low production costs; easy applicable; easy availability of components; a stable shelf life (low microbial-induced degradation); easy preparation; nonstaining; non-corrosive; low odor; rapid degradation after the application.

Traditionally chemical pesticides are used to control the outbreak of gregarious locusts in the field. However, in recent years chemical pesticides were discredited because of their negative effects on human health and harmful side effects on the ecosystem, which is caused by unspecific toxic responses of non-target organisms. In recent decades, the public awareness about the amount of residual chemicals that persist in food, ground water and the environment increased. These pesticides are often found to be toxic, potentially carcinogenic or otherwise incompatible to humans, domestic animals and/or aquatic organisms.

As a possible alternative to chemical pesticides, fungi targeting certain insect species were proposed by FAO (Food and agriculture organization) researchers and the WHO (world health organization). For example *Metarhizium anisopliae* can be used to control the outbreak of gregarious locusts in the field. Major drawbacks of using this fungus for the control of locusts come with the laboratory equipment that is necessary to check for the biological activity of the fungus and to prepare the solution for the aerosol treatment. Another drawback of this fungus treatment comes with the time it takes to grow and harm infested locusts, which is about two weeks. A rather unspecific infestation of non-target insect species creates another problem (see "green muscle"; Opender Koul, 2011). Often dry climate conditions and high natural UV radiation decrease the harmful effects that are expected from fungus treatment.

In some countries it is a habit of farmers to burn plastic to generate noxious clouds that should ward off the approaching locust swarm. This treatment is dangerous for any living organism due to the dioxins that are set free during and after uncontrolled firing. Firing and smoke clouds may also lead to the displacement of the swarm. The development of new insecticides against gregarious locusts based on organic components helps to address this problem by providing alternative insecticides, which can be used in combination or in alternation with other insecticides. In recent times, regulatory guidelines have encouraged the search for potentially less dangerous pesticidal compositions for controlling gregarious locusts via stringent restrictions on the use of certain synthetic pesticides.

Many natural products used as insecticides, including plant essential oils, do not provide adequate control of pests in that they either act very slowly or are not very stable and break down quickly, thereby failing to provide quick knockdown of insects (Tripathi, et al. 2009). Even products such as pyrethrum, although highly toxic to pests on contact when used properly as pesticidal formulation, is not effective in many applications.

In the herein described invention vegetable oils and several essential oils were mixed to create a formulation that harms locusts after fumigant treatment. All oils were found to act as insecticide either alone or in combination. Linseed oil is made from flax (*Linum usitatissimum*) and is known as a non-drying oil that is commonly used for the conservation of wood. Linseed oil mainly contains linolenic acid, which is also found in chia (*Salvia hispanica*), kiwifruit seeds (*Actinidia chinensis),* perilla (*Perilla frutescens*), lingonberry (*Vaccinium vitis-idaea*), camelina (*Camelina sativa*), purslane (*Portulaca oleracea*), sea buckthorn, walnut, rapeseed, soybean and hemp. Additionally, linseed oil contains oleic acid. Oleic acid is emitted from dead insect bodies and informs other insects like bees and ants to remove these "dying' insects from the hive or nest (e.g., McAfee et al., 2018). Locusts smelling like dead insects may not form swarms because oleic acid is regarded as the scent of death and related insects may avoid contact with unhealthy individuals.

Essential oils are also known as volatile oils, ethereal oils, aetherolea, or simply as the oil of the plant from which they were extracted. Orange peel oil contains limonene in the D-isomeric form which is a colorless liquid hydrocarbon classified as a cyclic terpene. The L-isomeric form of limonene is contained in mint oils and D- and L-limonene in Lovage (*Levisticum officinale*) extracts, which was found to negatively affect the ventilation of locusts (Halawa et al. 2014). Limonene oxidizes easily in moist air to produce carveol, carvone, and limonene oxide.

Caraway oil (oil from *Carum carvi*), dill seed oil (from *Anethum graveolens*), mandarin orange peel oil, spearmint oil (*Mentha spicata*), kuromoji oil, ginger grass oil, contains mono-terpene ketones in either one or both enantiomeric forms including carvone, carveol, and limonene, which turns into carvone in a basic solution. Under lab conditions an inhibition of larva and beetle development (Colorado potato beetle) and a decrease in feeding effectiveness caused by extracts of umbelliferae was noticed. Carvone was shown to be effective against mosquitos as described in US 20130101687 A1, against longhorn beetles as described in CN 102823616 A and against fungi as described in US 7745375 B2 and in CN 104507310 A. Caraway was also demonstrated to harm one of the major stored-products pests Khapra Beetle (Trogoderma granariu; Osman et al., 2016). Carvone also occurs in the extent of about 40-60% in dill seed oil (*Anethum graveolens*) and mandarin orange peel oil.

Wintergreen (*Gaultheria procumbens*) contains methyl salicylate which is also found to be the active substance of birch oil. Methyl salicylate can also be extracted from Betulaceae, particularly those in the subgenus Betulenta such as B. lenta, the black birch; all species of the genus Spiraea in the family Rosaceae, also called the meadowsweets; species of the genus Polygala in the family Polygalaceae. It also occurs in Hemp seed oil. Enantiomerically pure or racemic mixtures of methyl salicylate, carvone and limonene were previously described as active ingredient to be used in combination with myristate and palmitate against various forms of pests including insects in US 20070098750 A1.

There is still a great need for compounds that act as novel synergists for plant essential oils that are used against invertebrate pests, including insects, arachnids, larvae and eggs thereof. In addition, there is a need for a method of treating a locus to be protected to control (kill and/or repel) invertebrate pests.

In particular, there is a great need for novel pesticidal compositions to specifically and selectively control insects from the order Orthoptera, such us gregarious locusts.

It is therefore an object of the present invention to provide a novel and safe pesticidal composition based on plant essential oils and methods for using the same for the control of insects from the order Orthoptera, in particular for the control of gregarious locusts, wherein this pesticidal composition should be non-toxic for humans, vertebrates and plants, have no or only a weak toxic effect on non-target insects like beetles, and cause no harm to the environment and ground water system.

In one aspect, said object is met by a pesticidal composition according to the present invention and as defined in the accompanying claims. The pesticidal composition of the present invention comprises:
a.) a carrier oil component selected from the group consisting of linseed (*Linum usitatissimum*) oil, oils extracted or distilled from chia (*Salvia hispanica*)*,* kiwifruit seeds (*Actinidia chinensis*), perilla (*Perilla frutescens*), lingonberry (*Vaccinium vitis-idaea*), camelina (*Camelina sativa*), purslane (*Portulaca oleracea*), sea buckthorn, walnut, rapeseed, soybean and hemp, and mixtures of the aforementioned oils,
b.) an aqueous solution of hydrogencarbonate, and
c.) a plant essential oil component selected from the group consisting of orange peel oil, mandarin peel oil, mint oil, spearmint oil (*Mentha spicata*), kuromoji oil, ginger grass oil, wintergreen oil, birch oil, black birch oil (*Betulenta lenta*)*,* Spiraea (meadowsweets) oil, Polygalaceae oil, hemp seed oil, caraway oil, garden angelica oil (*Angelica archangelica*), lovage extracts, dill seed oil and mixtures thereof.

By employing the present invention, the prior art difficulties and drawbacks are overcome and a safe, effective insecticide for selectively controlling insects from the order Orthoptera is attained. As detailed herein, the pesticidal composition of the present invention is particularly constructed for controlling locusts and other members of the order Orthoptera. The present invention provides environmentally safe, effective, degradable, cheap, easy preparation and easy applicable insecticides, which can be easily removed after treatment. The compositions of this invention are non-toxic for humans, vertebrates and plants (when the oil mixture is removed from plant surfaces after locust treatment). The pesticidal compositions are degradable and cause no harm to the environment and the ground water system. Many essential oils are currently used to treat microbial plant diseases.

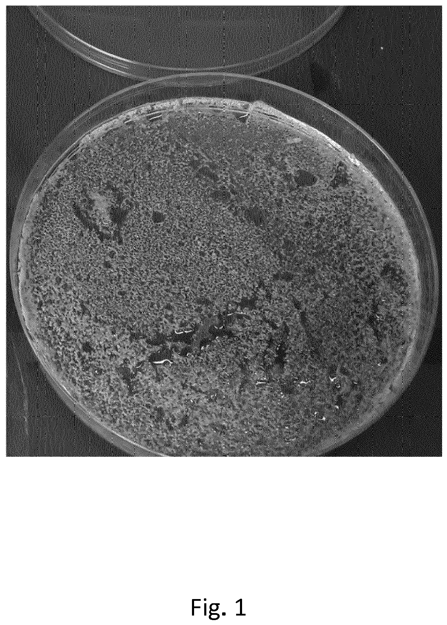

Importantly, the compositions of the present invention were surprisingly shown to have no or only a weak toxic effect on non-target insects like beetles, as demonstrated in the examples below. Heretofore, it has been unknown that a pesticidal composition being in the form of an emulsion and having the specific combination of compounds as defined above has a pesticidal effect when applied as aerosol in a single treatment to two species of gregarious locusts (*Locusta migratoria* and *Schistocerca gregaria*) as demonstrated in the examples below. This emulsion creates a viscous film on the treated insects that hardens with time as can be visualized after spraying this emulsion on a petri dish (see Example 1 below and Fig. 1). As the test results described in the examples below show, the specific combination of the components of the composition according to the invention leads to a synergistic and selective effect regarding their toxicity for locusts. In contrast, the same oil emulsion sprayed on adult mealworm beetles (*Tenebrio molitor*) was weakly toxic (only 2 of 14 individuals died after one week; see table 7 in the examples below). Considering the small size of the mealworm beetles and the associated ratio between body volume and surface, these results indicate a specific toxic effect on locusts.

As used herein, the term "pest" generally refers to organisms and microorganisms, including pathogens, that negatively affect plants or animals by colonizing, attacking, feeding on plants or infecting them. This includes organisms that spread diseases and/or damage the host and/or compete for host nutrients. In addition, plant pests are organisms known to associate with plants and which, as a result of that association, causes a detrimental effect on the plant's health and vigor. The present invention specifically addresses pests that relate to the insects from the order Orthoptera, and, in particular, to gregarious locusts.

The term "pesticide" as used herein generally refers to a substance that can be used in the control of agricultural, natural environment, such as insects, fungi, bacteria, and viruses. The term "pesticide" is understood to encompass naturally occurring or synthetic chemical insecticides (larvicides, and adulticides), insect growth regulators, acaricides (miticides), nematicides, ectoparasiticides, bactericides, fungicides, and herbicides (substance which can be used in agriculture to control or modify plant growth). The present invention relates to pesticidal compositions having the specific combination of compounds as defined herein and in the claims.

The term "plant" as used herein encompasses whole plants and parts of plants such as roots, stems, leaves and seed, as well as cells and tissues within the plants or plant parts. Target crops to be protected within the scope of the present invention include, without limitation, the following species of plants: cereals (wheat, barley, rye, oats, rice, sorghum and related crops), beet (sugar beet and fodder beet), forage grasses (orchardgrass, fescue, and the like), and leguminous plants (beans, lentils, peas, soybeans), oil plants (rape, mustard, poppy, olives, sunflowers, coconuts, castor oil plants, cocoa beans, groundnuts), cucumber plants (cucumber, marrows, melons) fiber plants (cotton, flax, hemp, jute), citrus fruit (oranges, lemons, grapefruit, mandarins), vegetables (spinach, lettuce, asparagus, cabbages and other Brassicae, onions, tomatoes, potatoes, paprika), lauraceae (avocados, carrots, cinnamon, camphor), deciduous trees and conifers (e.g. linden-trees, yew-trees, oak-trees, alders, poplars, birch-trees, firs, larches, pines), or plants such as maize, tobacco, nuts, coffee, sugar cane, tea, vines, hops, bananas and natural rubber plants, as well as ornamental plants (including composites).

The terms "control" or "controlling" used throughout the description and claims, are meant to include any pesticidal (killing) or pestistatic (inhibiting, maiming or generally interfering) activities of a pesticidal composition against a given pest. The present invention is directed to a novel pesticidal composition as described and defined herein which is effective in the control of insects from the order Orthoptera, and, in particular, in the control of gregarious locusts.

Preferably, the aqueous solution of hydrogencarbonate is a saturated aqueous hydrogencarbonate solution, for example an aqueous 10% hydrogencarbonate solution.

The inventors/applicant could identify preferable and optimum ratios between and among the constituents of the pesticidal composition according to the invention.

Optimally, the amount of each plant essential oil present in the composition and harmful for insects from the order Orthoptera, in particular gregarious locusts, is about 1% to about 6 % in relation to the total volume of the pesticidal composition. The plant essential oil component as defined by the claims is diluted with the carrier oil component as defined by the claims to obtain the pesticidal composition (emulsion) according to the invention.

Preferably, the hydrogen carbonate is selected from at the group consisting of sodium hydrogencarbonate (baking soda), potassium hydrogencarbonate, baking powder and mixtures thereof. An additional positive effect of baking soda comes with its fungicidal effect on plants. Care has to be taken when using baking powder for preparing the aqueous solution due to a strong release of CO₂ during the chemical reaction (explosion harzard).

Preferably, the carrier oil component essentially consists of linseed oil. Oleic acid contained in linseed oil is an organic acid that is emitted from dead insect bodies and informs other social insects, such as bees and ants to remove these insects from the hive or nest (e.g., McAfee et al., 2018). Treating locusts with oleic acid may prevent swarm formation because oleic acid is regarded as the scent of death in the world of insects. Optimally, the ratio between the linseed oil and the aqueous solution of hydrogencarbonate (b.)) is in the range of about 60:40 and about 50:50 parts per volume. If the amount of water in the composition is too high, it would take too much time for the linseed oil to become viscous once exposed to air. If the proportion of linseed oil in the composition is too high, the pesticide becomes more expensive and more viscous, which makes it difficult to spray and remove it from the surface of the plants/crops (regarding removal of the pesticide see description below).

Preferably, the plant essential oil component (iii.) essentially consists of orange peel oil, wintergreen oil, birch oil, caraway oil, and mixtures thereof.

In preferred embodiments, the pesticidal composition according to the invention consists of:
- linseed oil,
- a saturated aqueous solution of hydrogencarbonate selected from at the group consisting of sodium hydrogencarbonate (baking soda), potassium hydrogencarbonate, baking powder and mixtures thereof, and
- and a plant essential oil component selected from the group consisting of orange peel oil, wintergreen oil, birch oil, caraway oil and mixtures thereof.

In particularly preferred embodiments, the plant essential oil component essentially consists of a mixture of orange peel oil, wintergreen oil, and caraway oil.

In another aspect, the pesticidal composition as described herein and as defined in the claims is a sprayable pesticidal composition. Thus, the present invention also relates to a sprayable pesticidal composition having the features of the herein-described pesticidal composition. It is clear to those skilled in the art that the pesticidal composition as described herein and being in the form of an emulsion, may be applied to the surfaces of plants and crops by spraying. The composition may be sprayed onto crops growing in a location where control of insects from the order Orthoptera, in particular control of gregarious locusts, is desired. This may be done by means of conventionally used spraying devices, such as hand held spraying devices or via aerial crop spraying with airplanes and large machines sprayers. The devices that can be used in the field are aerosol sprayers (knapsack sprayer), fogging machines, exhaust nozzle sprayers and similar devices (for descriptions see "Pesticide application techniques manual" offered by the Plant Health Engineering Division: http://niphm.gov.in/Recruitments/PHE-ASO-Manual-22042013.pdf; and the FAO publication "Pesticide application techniques in west Africa": http://www.fao.org/docrep/x5858e/x5858e00.htm#P97_3845). The spraying devices need to be equipped with a stirring unit to prevent the oil emulsion from its separation into a water and oil component (phase separation.)

For reasons of easier storage and transport, the pesticidal compositions of the present invention may be provided in the form of an on-site preparation product kit, wherein users may add water on-site to prepare a field-strength pesticidal composition. Thus, in another aspect, the present invention also relates to a kit for an on-site preparation of a sprayable pesticidal composition, the kit comprising:
i. hydrogencarbonate powder,
ii. a carrier oil component selected from the group consisting of linseed oil, oils extracted or distilled from chia (*Salvia hispanica*)*,* kiwifruit seeds (*Actinidia chinensis*), perilla (*Perilla frutescens*), lingonberry (*Vaccinium vitis-idaea*), camelina (*Camelina sativa*), purslane (*Portulaca oleracea*), sea buckthorn, walnut, rapeseed, soybean and hemp, and mixtures of the aforementioned oils, and
iii. a plant essential oil component selected from the group consisting of orange peel oil, mandarin peel oil, mint oil, spearmint oil (*Mentha spicata*), kuromoji oil, ginger grass oil, wintergreen oil, birch oil, black birch oil (*Betulenta lenta*), Spiraea (meadowsweets) oil, Polygalaceae oil, Hemp seed oil, caraway oil, garden angelica oil (*Angelica archangelica*), lovage extracts, dill seed oil and mixtures thereof,
and instructions comprising:
- a first preparation step in which the hydrogencarbonate powder (i.) is solved in water to obtain an aqueous solution of hydrogencarbonate for storage until use, and in which the carrier oil component (ii.) and the plant essential oil component (iii.) are mixed to obtain a mixed oil composition for storage until use, and
- a second preparation step in which the aqueous solution of hydrogencarbonate and the mixed oil composition are mixed, preferably in a of ratio 42% and 58%, to obtain a ready-to-use sprayable pesticidal composition.

Furthermore, the above-mentioned embodiments and features of the pesticidal composition as described above are likewise applicable to the on-site prepared and ready-to-use sprayable pesticidal composition. For example, the sprayable pesticidal composition may have a formulation according to Formulations 101 and 102 described in the Examples below.

In another aspect, the present invention relates to the use of the pesticidal composition and the (on-site prepared and ready-to-use) sprayable pesticidal composition, respectively, as described in this disclosure for controlling insects from the order Orthoptera. Specifically, the present invention relates to the use of said pesticidal composition and said sprayable composition, respectively, for controlling gregarious locusts including instars (nymphs) and adult gregarious locusts. In particular, the gregarious locusts are selected from the species *Locusta migratoria, Schistocerca gregaria, Nomadacris septemfasciata, Locustana pardalina, Calliptamus italicus, Dociostaurus maroccanus, Gastrimargus musicus, Schistocerca picifrons, Schistocerca cancellata, Schistocerca interrita, Coscineuta virens, Patanga succincta, Anacridium melanorhodon, Aiolopus simulatrix, Ceracris kiangsu, Rhammatocerus schistocercoides, Melanoplus sanguinipes, Melanoplus differentialis, Gomphocerus sibricus, Pyrgodera armata, Austroicetes cruciata, Oedaleus senegalensis, Oedaleus australis, Austracris guttulosa* and *Chortoicetes terminifera.*

In a further aspect, the present invention also relates to a method for controlling insects from the order Orthoptera, in particular for controlling gregarious locusts, the method comprising applying a pesticidally effective amount of the pesticidal composition and the (on-site prepared and ready-to-use) sprayable pesticidal composition, respectively, as described herein to a location where control of insects from the order Orthoptera, in particular control of gregarious locusts, is desired. As mentioned above, the method of the invention is useful in the control of gregarious locusts including instars (nymphs) and adult gregarious locusts, in particular for the control of gregarious locusts selected from the species *Locusta migratoria, Schistocerca gregaria, Nomadacris septemfasciata, Locustana pardalina, Calliptamus italicus, Dociostaurus maroccanus, Gastrimargus musicus, Schistocerca picifrons, Schistocerca cancellata, Schistocerca interrita, Coscineuta virens, Patanga succincta, Anacridium melanorhodon, Aiolopus simulatrix, Ceracris kiangsu, Rhammatocerus schistocercoides, Melanoplus sanguinipes, Melanoplus differentialis, Gomphocerus sibricus, Pyrgodera armata, Austroicetes cruciata, Oedaleus senegalensis, Oedaleus australis, Austracris guttulosa* and *Chortoicetes terminifera.* Preferably, the pesticidal composition and the (on-site prepared and ready-to-use) sprayable pesticidal composition, respectively, is applied to the location shortly before sunset, when the insects already stopped swarming and are resting (Maeno et al. 2016). Preferably, the pesticidal composition and the (on-site prepared and ready-to-use) sprayable pesticidal composition, respectively, is applied to plants and/or crops present in said location, in particular to leaves of said plants and/or crops where locusts are feeding or resting.

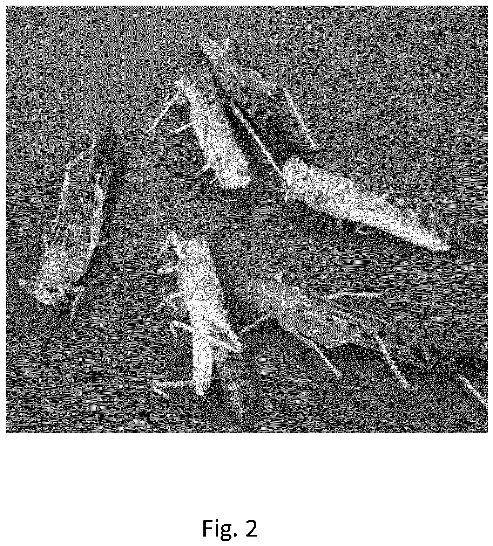

In a further aspect of the method of the present invention, the method further comprises removing the pesticidal composition and the (on-site prepared and ready-to-use) sprayable pesticidal composition, respectively, from the location after treatment by applying a washing agent selected from the group consisting of: an aqueous solution of hydrogencarbonate selected from at the group consisting of sodium hydrogencarbonate (baking soda), potassium hydrogencarbonate, baking powder and mixtures thereof, soapy water or an aqueous acetic acid solution. The aqueous solution of hydrogencarbonate may be optionally saturated. Washing plant and crop surfaces in this way will prevent e.g. the linseed oil from getting hard and causing a damaging effect to plants and crops (see experiment shown in figure 2). The remaining of the washing solution on plant surfaces can be removed by spraying water. If linseed oil is used as the carrier oil component, removal thereof from plant surfaces should be executed before sunset on the day following the treatment of the insects with the pesticidal composition/ sprayable composition to prevent a damaging effect caused by sun radiation. The pesticidal compositions and sprayable compositions, respectively, are not only environmentally safe, effective, degradable, cheap and easy applicable to target locations, but can also be easily removed after treatment. Due to their easy removal from plants/crops after treatment, they are non-toxic for humans and vertebrates consuming the plants/crops. Furthermore, the compositions are non-toxic for the plants and crops as well. Since the compositions are degradable, they cause no harm to the environment and the ground water system after being removed from the plants and crops by means the washing agent.

In a further aspect of the method of the present invention, the insects from the order Orthoptera, in particular gregarious locusts, that are knocked down or killed by said method are collected for further uses. For example, the collected insects may be used as a protein source in the food and feed industry.

In the following, in order to further demonstrate the present invention, illustrative and non-restrictive examples are given.

**MATERIALS AND METHODS:** The materials and methods used in the below examples 1 to 4 are provided in the following.

### Suppliers of pesticide components:

Sodium hydrogencarbonate (NaHCO3 or NaHCO₃)) was purchased from Dr. Oetker, Postfach 19, Villach, Austria.

### Oils and suppliers:

Organic linseed oil was purchased from Spar Deutschland Natur-Pur; 100% pure Garlic oil (*Alium sativum*) was purchased from Dragonspice Naturwaren, Im Staudfuß 4 , 72770 Reutlingen, Germany; 100% pure caraway oil (*Carum carvi*) was purchased from Bombastus-Werke, Freital, Germany; Clove oil (*Eugenia carophyllus*) was purchased from Greenmade from V03 Trading GmbH Hanns-Martin-Schleyer-Str.30 a 47877 Willich, Germany; 100% pure peppermit oil (*Mentha piperita*) was purchased from Primavera, Naturparadies 1, Oy-Mittelberg, Germany; 100% pure orange peel oil (*Citrus aurantium dulcis*) was purchased from Primavera, Naturparadies 1, Oy-Mittelberg, Germany; 100% pure Ginger oil (*Zingiber officinale,* root oil) was purchased from Primavera, Naturparadies 1, Oy-Mittelberg, Germany; 100% pure birch oil (*Betula lenta*) was purchased from Laboratoire Centiflor, Entrechaux, France; Eucalyptus = 100% pure Eucalyptus globulus leaf oil was purchased from Primavera, Naturparadies 1, Oy-Mittelberg, Germany; 100% pure basil oil (*Ocimum basilicum*) was purchased from Naissance, Unit 9 Milland Road Industrial Estate Milland Road, Neath, UK. 100% pure wintergreen oil (*Gaultheria procumbens*) was purchased from Naissance (Unit 9 Milland Road Industrial Estate Milland Road, Neath, UK). Linseed oils was stored in a dark bottle at 4°C and all other oils were stored at room temperature in a dark place.

### Insects:

Locusts in the gregarious phase were purchased from a breeding stock of the Buchner company in Austria. At the Institute of Zoology in Graz, locusts were kept at a temperature of 32-34°C and 55-65% relative humidity in a glass terrarium (dimension: 60 x 30 x 30 cm). The light: dark cycle was 12:12 h. The diet consisted of bio wheat seedlings, organic wheat bran (DM-Drogeriemarkt, Carl-Metz-Straße 1, Karlsruhe, Germany) and oatmeal (SPAR Osterreich Warenhandels AG, Europastraße 3, Salzburg, Austria).

Adult mealworm beetles (*Tenebrio molitor*) were taken from a laboratory breed of the Institute of Zoology in Graz. These insects were exposed to a light:dark cycle of 12:12 h and maintained at a constant temperature of 21°C, 70% relative humidity. Their diet consisted of dry bread, apples, fish food and oatmeal.

### Feeding plants:

Seeds of organic wheat (DM-Drogeriemarkt, Carl-Metz-Straße 1, Karlsruhe, Germany) were planted in plastic pots half filled with perlite (Plant!t, HydroGarden Wholesale Supplies Ltd, 2 Progress Way, Binley, Coventry, CV3 2NT, UK) and covered with soil (Organic soil from EuFlor Inc., Landsbergerstrasse 394, Munich, Germany). Pots were watered daily. Plants were exposed to a light: dark schedule of 12: 12h. After one week, wheat seedlings were used as food for the gregarious locusts.

### Preparation of the pesticidal emulsion

First, the NaHCO3 solution (4g NaHCO3 powder dissolved in 40 ml Aqua dest. = 10 %) was prepared. Then this solution was shaken and after about 10 min, the supernatant was added to the linseed oil using a plastic laboratory tube (capacity of 50 ml). The essential oils were added to this emulsion using an automatic pipette (Eppendorf Inc.). After shaking the emulsion, it was sprayed to the insects using a pump spray. The same amount of biopesticide that was applied to either locusts or beetles in the experiments (see Examples 2, 3, and 4) was sprayed on a weighing dish to quantify the volume.

### Locust experiment:

Locusts were placed in plastic boxes each containing 10 individuals, a small piece of kitchen roll paper (one layer of paper tissue 12 x 12 cm) and some wheat seedlings (about 35). The kitchen roll paper was used to soak up the remaining oil. Boxes were of dimension 20cm x 12cm x 14cm. The NaHCO3 (sodium hydrogencarbonate) solution (4g NaHCO3 powder dissolved in 40 ml Aqua dest. = 10 %) was prepared and mixed with the oil mixtures. The emulsion was shaken before spraying on locusts. 4.9 ml of the oil mixture was sprayed in each box (equals five pump sprays), then the box was covered with transparent garment. The wheat grass was sprayed as well. Locusts were offered to feed on fresh wheat grass seedlings. Since all locusts stopped feeding after treatment, the grass was never replaced throughout the experiment in the treatment groups. The experiment was performed in the fume cupboard with a medium airflow. Insect boxes were exposed to a light:dark cycle of 12:12 h. The number of living and dead insects was frequently checked after gently shaking the boxes.

### Beetle experiment:

Beetles were placed into plastic boxes each containing a small piece of apple and 3.5g of oat flakes and 0.5g of fish food (flocks, ASTRA Aquaria GmbH, Bissendorf, Germany). The boxes had pores on the sides and a dimension of 9cm x 9cm x 6cm. The NaHCO3 solution (4g NaHCO3 powder dissolved in 40 ml Aqua dest. = 10 %) was prepared and mixed with the oil mixtures. The emulsion was shaken before spraying it on the beetles. Because of the smaller box size, in which beetles were treated, and the lower volume of this box, only 2.9 ml of the oil emulsion was sprayed in each box (equals three pump sprays). The food was already in the box and sprayed as well. Then the boxes were covered with a plastic cover (lacking pores). The experiment was performed in a fume cupboard with a medium airflow. Insect boxes were exposed to a light:dark cycle of 12:12 h. Every two days, a small piece of an apple was provided. The number of living and dead insects was frequently checked after gently shaking the boxes.

### EXAMPLES

### Example 1 - Spray test to assess the properties of the pesticidal composition on surfaces

In a first experiment, an emulsion of 5 ml linseed oil + 4 ml saturated NaHCO3 solution + 0,5 ml pure garlic oil was prepared and then sprayed into a petri dish in order to assess the period of time until the emulsion is getting viscous. As can be seen in the picture of **Fig. 1****,** after 24h a viscous film is formed on the bottom of the petri dish.

In another experiment, an emulsion of linseed oil + saturated NaHCO3 solution was sprayed on locusts, wherein some individuals died within the first 24 hours, but most insects died on the following days (see example 2, table 2). Therefore, essential oils were added to accelerate and enhance the toxic effect of emulsion1 (see example 2, table 2). **Fig. 2** shows a photograph of dead locusts treated with said emulsion of linseed oil + saturated NaHCO3 solution.

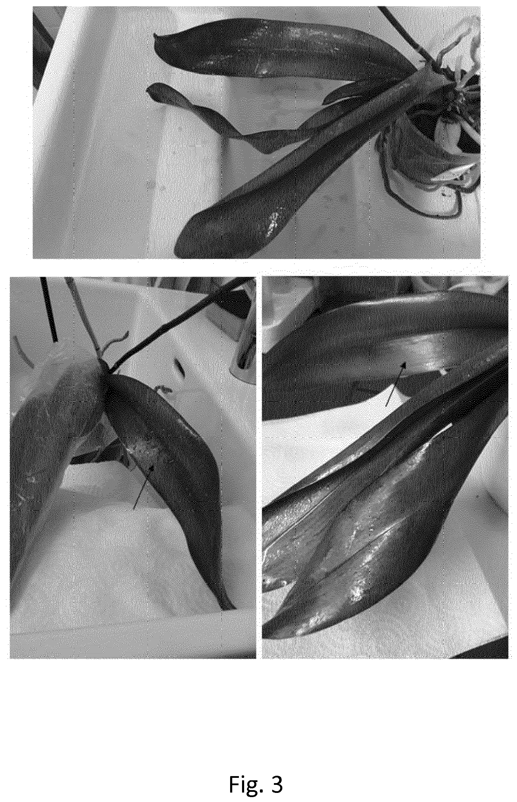

The emulsion that was found to be most effective against locusts (Formulation 102; see Example 2) was sprayed onto all leaves of an orchidee (see upper image of **Fig. 3**). As can be seen in **Fig. 3****,** a viscous film is formed on the leaves that hardens with time. After 24 hours, the viscous film was removed from the surface of one leave (indicated by an arrow in the two lower images of **Fig. 3**) by spraying saturated water-solved sodium hydrogencarbonate onto the leave. The remaining sodium hydrogencarbonate crystals were mechanically removed by spraying pure water onto the leaves. As can be clearly seen in the two lower images of **Fig. 3** (see respective arrows), the viscous film that was formed by the pesticidal emulsion could be entirely removed.

This experiment shows that washing plant surfaces in this way will prevent the pesticidal emulsion from getting hard and causing a damaging effect to plants and crops.

In a practical implementation, the removal of the pesticidal composition from plant surfaces should be executed before sunset on the day following the spray application in order to prevent a damaging effect caused by sun radiation.

### Example 2 - Spray tests on gregarious locust species Locusta migratoria and Schistocerca gregaria

This example demonstrates the pesticidal effect of compositions according to the invention and controls when applied as an aerosol to the gregarious locust species *Locusta migratoria* (see Table 2) and *Schistocerca gregaria* (see Table 3).

The following pesticidal compositions according to the invention were applied to the locusts:
- Formulation 101 (according to the invention): 10 ml linseed oil + 8 ml aqueous 10% sodium hydrogencarbonate solution + 0.5 ml orange peel oil + 0.25 ml caraway oil + 0.25 ml wintergreen oil.
- Formulation 102 (according to the invention): 10 ml linseed oil + 8 ml aqueous 10% sodium hydrogencarbonate solution + 0.25 ml orange peel oil + 0.5 ml caraway oil + 0.25 ml wintergreen oil.

The pesticidal compositions according to the invention were compared with the following controls:
- Control 1: no treatment
- Control 2: 10 ml linseed oil + 8 ml aqueous 10% sodium hydrogen carbonate solution (NaHCO3 Solu. 10%)

Temperature (Temp.) and humidity (Humid.) was between 22.5°C and 27°C and humidity between about 30 and 50%.

The compositions of Formulations 101 and 102 and of control 2 are summarized in the following Table 1:

**Table 1: concentrations of Formulations 101 and 102 and of control 2**

| **Treatments** | **linseed oil** | | **NaHCO3 solu.** | | **Mixed plant essential oils** | | | | | | **Total amount** |
|---|---|---|---|---|---|---|---|---|---|---|---|
| | **ml** | **%** | **ml** | **%** | **Orange (ml)** | **%** | **Wintergreen (ml)** | **%** | **Caraway (ml)** | **%** | **ml** |
| **(Linseed oil + NaHCO3 solu. 10%) = Emulsion1 = control 2** | 10 | **55.6** | 8 | **44.4** | ........... | | ............ | **0** | ........... | **0** | 18 |
| **Formulation 101** | 10 | **52.6** | 8 | **42.1** | 0.5 | **2.6** | 0.25 | **1.3** | 0.25 | **1.3** | 19 |
| **Formulation 102** | 10 | **52.6** | 8 | **42.1** | 0.25 | **1.3** | 0.25 | **1.3** | 0.5 | **2.6** | 19 |

**Table 2: Results of spray tests on Locusta migratoria:**

| **Airosol treatments of Locusta migratoria** | **after 24 hours** | | | | **after 44 hours** | | | |
|---|---|---|---|---|---|---|---|---|
| | **Alive** | **%** | **dead** | **%** | **Alive** | **%** | **dead** | **%** |
| **Control 1 (without any treatment)** | 50 | **100.0** | 0 | **0.0** | 49 | **98.0** | 1 | **2.0** |
| **control 2 (linseed oil + NaHCO3 solu. 10%)** | 34 | **68.0** | 16 | **32.0** | 16 | **32.0** | 34 | **68.0** |
| **Formulation 101** | 20 | **40.0** | 30 | **60.0** | 0 | **0.0** | 50 | **100.0** |
| **Formulation 102** | 0 | **0.0** | 50 | **100.0** | .... | **....** | .... | **....** |

**Table 3. Results of spray tests on Schistocerca gregaria:**

| **Airosol treatment of Schistocerca gregaria** | **after 24 hours** | | | | **after 30 hours** | | | | **after 44 hours** | | | |
|---|---|---|---|---|---|---|---|---|---|---|---|---|
| | **Alive** | **%** | **dead** | **%** | **Alive** | **%** | **dead** | **%** | **Alive** | **%** | **dead** | **%** |
| **Control 1 (without any treatment)** | 50 | **100.0** | 0 | **0.0** | 50 | **100.0** | 0 | **0.0** | 49 | **98.0** | 1 | **2.0** |
| **control 2 (linseed oil + NaHCO3 solu. 10%)** | 47 | **94.0** | 3 | **6.0** | 38 | **76.0** | 12 | **24.0** | 20 | **40.0** | 30 | **60.0** |
| **Formulation 101** | 17 | **34.0** | 33 | **66.0** | 10 | **20.0** | 40 | **80.0** | 0 | **0.0** | 50 | **100.0** |
| **Formulation 102** | 10 | **20.0** | 40 | **80.0** | 5 | **10.0** | 45 | **90.0** | 0 | **0.0** | 50 | **100.0** |

The experimental data given in Table 2 and Table 3 demonstrate that the addition of plant essential oil components to an emulsion of linseed oil + 10% solution of sodium hydrogencarbonate (control 2) significantly improves the pesticidal activity against gregarious locusts. A single aerosol treatment with Formulation 102 killed all *Locusta migratoria* adults within 24 hours and 80% of adult *Schistocerca gregaria* in the same time span (see tables 2 and 3). The remaining individuals died on the following day. Thus, the pesticidal compositions according to the invention, exemplified by formulations 101 and 102 demonstrate a synergistic effect of the components comprised therein with regard to its toxicity for locusts.

All aerosol treated locusts stopped feeding immediately and lost their ability to jump or move quickly, which would expose them to natural enemies such as birds, lizards, ants and spiders in the field. In order to expose as many locust individuals as possible to an aerosol of this novel pesticidal composition, these insects should be sprayed shortly before sunset when insects stopped swarming (Maeno et al. 2016).

It is within scope of routine experiments that may be performed by those skilled in the art to add essential oil components in higher or lower quantities. For example, the wintergreen oil present in formulation 101 and formulation 102 can be substituted by birch oil. Orange peel oil can be substituted by mandarin peel oil or lovage plant extracts. Instead of caraway oil, dill seed oil can be used as well.

### Example 3 - Spray tests using mealworm beetles (Tenebrio molitor)

In this example and in a first experiment, the pesticidal/ toxic effect of an oil emulsion comprising different essential oil components, including compositions according to the invention, and of controls when applied as an aerosol to non-target insects, namely adults of mealworm beetles (*Tenebrio molitor*) was tested (see results in table 5). The concentrations of the tested emulsions and compositions are summarized in the following table 4:

**Table 4: concentrations of the tested emulsions and compositions**

| **Treatments** | **linseed oil** | | **NaHCO3 solu.** | | **Plant essential oil** | | **Total amount** |
|---|---|---|---|---|---|---|---|
| | **ml** | **%** | **ml** | **%** | **ml** | **%** | **ml** |
| **(Linseed oil + NaHCO3 solu. 10%) = Emulsion 1 control 2** | 10 | **55.6** | 8 | **44.4** | ........... | | 18 |
| **Emulsion 1 + garlic oil** | 10 | **52.6** | 8 | **42.1** | 1 | **5.3** | 19 |
| **Emulsion 1 + caraway oil** | 10 | **52.6** | 8 | **42.1** | 1 | **5.3** | 19 |
| **Emulsion 1 + clove oil** | 10 | **52.6** | 8 | **42.1** | 1 | **5.3** | 19 |
| **Emulsion 1 + peppermint oil** | 10 | **52.6** | 8 | **42.1** | 1 | **5.3** | 19 |
| **Emulsion 1 + orange peel oil** | 10 | **52.6** | 8 | **42.1** | 1 | **5.3** | 19 |
| **Emulsion 1 + ginger oil** | 10 | **52.6** | 8 | **42.1** | 1 | **5.3** | 19 |
| **Emulsion 1+birch oil** | 10 | **52.6** | 8 | **42.1** | 1 | **5.3** | 19 |
| **Emulsion 1 + eucalyptus oil** | 10 | **52.6** | 8 | **42.1** | 1 | **5.3** | 19 |
| **Emulsion 1 + basil oil** | 10 | **52.6** | 8 | **42.1** | 1 | **5.3** | 19 |

The oil emulsion comprising different essential oil components were compared with the following controls:
- Control 1: no treatment
- Control 2: Emulsion 1

Table 5 shows the results of spray tests performed with mealworm beetles (*Tenebrio molitor*) adults screening for essential oils (applied in a concentration of 5.3% of the total volume). Highlighted by a single asterisk (*) are essential oils (caraway oil and orange peel oil) that are less harmful for beetles but toxic for locusts. Essential oils with only weak or no toxic effects for beetles and locusts are highlighted by two asterisks (**) and comprise peppermint oil, ginger oil, basil oil and eucalyptus oil. A strong pesticidal effect against adult mealworm beetles was found when one of the following essential oils were sprayed with a concentration of 5.3% of the total volume: garlic oil, clove oil and birch oil. Garlic oil has a strong smell and killed both, beetles and locusts (82% of *Schistocerca gregaria* adults were killed after 24 h using a concentration of 5.3%). Using the same concentration of clove oil was not very effective against adult *Schistocerca greagaria* (60% insects were killed after 24 hours) compared to birch oil, which killed 80% of locusts within 24 hours using the same concentration. Wintergreen oil has the same active chemical component as birch oil, but is less expensive. Therefore, wintergreen oil was used at lower concentration in combination with other essential oils that are effective against locusts (orange and caraway oil) in the Formulations of this invention.

**Table 5: results of spray tests performed with mealworm beetles adults screening for essential oils**

| **Airosol treatments of meal worm beetles** | **after 2 days** | | | | **after 3 days** | | | |
|---|---|---|---|---|---|---|---|---|
| | **Alive** | **%** | **dead** | **%** | **Alive** | **%** | **dead** | **%** |
| **Control 1 (without any treatment)** | 6 | **85.7** | 1 | **14.3** | 5 | **71.4** | 2 | **28.6** |
| **control 2 (linseed oil + NaHC03 solu. 10%) = emulsion 1** | 7 | **100.0** | 0 | **0** | 6 | **85.7** | 1 | **14.3** |
| **Emulsion 1 +garlic oil** | 0 | **0.0** | 7 | **100** | 0 | **0.0** | 7 | **100.0** |
| **Emulsion 1 + caraway oil *** | 5 | **71.4** | 2 | **28.6** | 5 | **71.4** | 2 | **28.6** |
| **Emulsion 1 + clove oil** | 3 | **42.9** | 4 | **57.1** | 1 | **14.3** | 6 | **85.7** |
| **Emulsion 1 + peppermint oil **** | 7 | **100.0** | 0 | **0** | 7 | **100.0** | 0 | **0.0** |
| **Emulsion 1 + orange peel oil *** | 6 | **85.7** | 1 | **14.3** | 6 | **85.7** | 1 | **14.3** |
| **Emulsion 1 + ginger oil **** | 7 | **100.0** | 0 | **0** | 6 | **85.7** | 1 | **14.3** |
| **Emulsion 1 + birch oil** | 4 | **57.1** | 3 | **42.9** | 4 | **57.1** | 3 | **42.9** |
| **Emulsion 1 + eucalyptus oil **** | 7 | **100** | 0 | **0** | 6 | **85.7** | 1 | **14.3** |
| **Emulsion 1 + basil oil **** | 6 | **85,7** | 1 | **14.3** | 5 | **71.4** | 2 | **28.6** |

| | | | | | | | | |
|---|---|---|---|---|---|---|---|---|
| * less insecticide for beetles, but effective against locusts ** less insecticide for beetles and locusts | | | | | | | | |

In a further experiment of this example, spray tests on adult mealworm beetles (*Tenebrio molitor*) using oil emulsions consisting of combinations of various essential oils were performed (see results in table 7). The concentrations of these tested oil emulsions are summarized in the following Table 6:

**Table 6: concentrations of tested oil emulsions**

| **Treatments** | **linseed** oil | | **NaHCO3 solu.** | | **Mixed plant essential oils** | | | | | | **Total amount** |
|---|---|---|---|---|---|---|---|---|---|---|---|
| | **ml** | **%** | **ml** | **%** | **Orange (ml)** | **%** | **Wintergreen (ml)** | **%** | **Caraway (ml)** | **%** | **ml** |
| **Emulsion 1 + orange peel oil +wintergreen** | 10 | **52.6** | 8 | **42.1** | 0.5 | **2.6** | 0.5 | **2.6** | ........... | | 19 |
| **Emulsion 1 + orange peel oil + caraway oil** | 10 | **52.6** | 8 | **42.1** | 0.5 | **2.6** | ........... | | 0.5 | **2.6** | 19 |
| **Emulsion 1 + Wintergreen + caraway** | 10 | **52.6** | 8,5 | **42.1** | ........... | | 0.25 | **1.3** | 0.25 | **1.3** | 19 |
| **Formulation 101** | 10 | **52.6** | 8 | **42.1** | 0.5 | **2.6** | 0.25 | **1.3** | 0.25 | **1.3** | 19 |
| **Formulation 102** | 10 | **52.6** | 8 | **42.1** | 0.25 | **1.3** | 0.25 | **1.3** | 0.5 | **2.6** | 19 |

Referring now to table 7, highlighted by an asterisk (*) in this table are those essential oil mixtures that are rather harmless for beetles, but very toxic for locusts, namely orange peel oil (applied at a higher concentration: 5.3%), wintergreen + caraway (at lower concentrations), Formulation 101 and Formulation 102. The exact composition of Formulation 101 and Formulation 102 (both being formulations according to the invention) are listed in table 6 above. Furthermore, mealworm beetle experiments have shown that higher concentrations of caraway and wintergreen (5.3% of the total volume; concentrations are shown in table 4) can be highly toxic for them (only 11.1% and 5.6% survived after 8 days following treatments, respectively). The concentrations of these essential oils was reduced in the Formulation 101 and 102 to prevent a toxic effect for mealworm beetles, but keep emulsions effective against locusts.

**Table 7: Results of spray tests on mealworm beetles**

| **Airosol treatments of meal worm beetles** | **after 8 days** | | | | **after 14 days** | | | | **after 18 days** | | | |
|---|---|---|---|---|---|---|---|---|---|---|---|---|
| | **Alive** | **%** | **dead** | **%** | **Alive** | **%** | **dead** | **%** | **Alive** | **%** | **dead** | **%** |
| **Control 1 (without any treatment)** | 16 | **88.9** | 2 | **11.1** | 15 | **83.3** | 3 | **16.7** | 15 | **83.3** | 3 | **16.7** |
| **control 2 (linseed oil + NaHCO3 solu. 10%) = emulsion 1** | 16 | **88.9** | 2 | **11.1** | 13 | **72.2** | 5 | **27.8** | 12 | **66.7** | 6 | **33.3** |
| **emulsion 1 + 1 ml orange peel oil *** | 17 | **94.4** | 1 | **5.6** | 16 | **88.9** | 2 | **11.1** | 15 | **83.3** | 3 | **16.7** |
| **emulsion 1 + 1 ml wintergreen oil** | 1 | **5.6** | 17 | **94.4** | 0 | **0.0** | 18 | **100.0** | 0 | **0.0** | 18 | **100.0** |
| **emulsion 1+0.5 ml orange peel oil +0.5 ml wintergreen** | 11 | **61.1** | 7 | **38.9** | 11 | **61.1** | 7 | **38.9** | 11 | **61.1** | 7 | **38.9** |
| **emulsion 1 + 1 ml caraway oil** | 2 | **11.1** | 16 | **88.9** | 1 | **5.6** | 17 | **94.4** | 0 | **0.0** | 18 | **100.0** |
| **emulsion 1 + 0.5 ml orange peel oil + 0.5 ml caraway oil** | 14 | **77.8** | 4 | **22.2** | 11 | **61.1** | 7 | **38.9** | 10 | **55.6** | 8 | **44.4** |
| **emulsion 1 + 0.25 wintergreen + 0.25 caraway *** | 16 | **88.9** | 2 | **11.1** | 15 | **83.3** | 3 | **16.7** | 15 | **83.3** | 3 | **16.7** |
| **Formulation 101 *** | 14 | **77.8** | 4 | **22.2** | 13 | **72.2** | 5 | **27.8** | 13 | **72.2** | 5 | **27.8** |
| **Formulation 102 *** (14 individuals) | 12 | **85.7** | 2 | **14.3** | 11 | **78.6** | 3 | **21.4** | 11 | **78.6** | 3 | **21.4** |

| | | | | | | | | | | | | |
|---|---|---|---|---|---|---|---|---|---|---|---|---|
| * less insecticide for beetles, but effective against locusts | | | | | | | | | | | | |

Considering the small size of the mealworm beetles and the associated ratio between body volume and surface, these results indicate a specific toxic effect on locusts.

### Example 4 - Spray tests on Schistocerca gregaria adults and on Locusta migratoria nymphs using a two component ready-to-use kit

This example demonstrates the effect of a pesticidal composition according to the invention when applied as an aerosol to adult *Schistocerca gregaria* (see table 8) as well as to smaller and larger *Locusta migratoria* nymphs (see table 9).

The pesticidal composition tested in Example 4 contains the components of formulation 102: 10 ml linseed oil + 8 ml aqueous 10% sodium hydrogen carbonate solution + 0.25 wintergreen + 0.25 ml orange peel oil + 0.5 ml caraway oil (the detailed composition of formulation 102 is given in table 1 under example 2 above). The pesticidal composition (formulation 102) was prepared in the form of a two-component ready-to-use kit either two or three weeks before spraying it on adult *Schistocerca gregaria* and *Locusta migratoria* nymphs, respectively. One solution of this kit contained all oils in the same amount as was described as formulation 102 and the other solution of this kit comprises the aqueous sodium hydrogencarbonate solution. Both components were stored at room temperature in a dark place before mixing them to obtain a final sprayable ready-to-use formulation (8 ml of the NaHCO3 solution + 11 ml of the oil mixture). Five pump sprays of this formulation were used to treat locusts. All *Schistocerca gregaria* adults died within 30 hours after treatment, 83% of larger *Locusta migratoria* nymphs died within 24 hours (see tables 8 and 9) and 93.6% of the small *Locusta migratoria* nymphs died within the first 24 hours of this experiment. This experiment shows that a two-component kit in which the essential oils were already mixed with the linseed oil can be used to combat locust outbreaks.

Table 8 shows the effect of formulation 102 when applied as an aerosol to adult *Schistocerca gregaria.* The two components (oil mixture and NaHCO3 solution) of the kit were prepared two weeks before mixing them to obtain the final sprayable ready-to-use formulation and spraying the same onto the locusts.

**Table 8: effect of formulation 102 applied as an aerosol to adult Schistocerca gregaria.**

| **Airosol treatment of Schistocerca gregaria** | **after 16 hours** | | | | **after 30 hours** | | | |
|---|---|---|---|---|---|---|---|---|
| | **Alive** | **%** | **dead** | **%** | **Alive** | **%** | **dead** | **%** |
| **Formulation 102** | 5 | **50** | 5 | **50** | 0 | **0** | 10 | **100** |

Table 9 shows the effect of formulation 102 when applied as an aerosol to smaller and larger *Locusta migratoria* nymphs. The two components (oil mixture and NaHCO3 solution) of the kit were prepared three before mixing them to obtain the final sprayable ready-to-use formulation and spraying the same onto the nymphs.

**Table 9: effect of formulation 102 applied as an aerosol to smaller and larger Locusta migratoria nymphs.**

| **Airosol Treatments** | **after 4.5 hours** | | | | **after 24 hours** | | | | **after 47 hours** | | | |
|---|---|---|---|---|---|---|---|---|---|---|---|---|
| | **Alive** | **%** | **dead** | **%** | **Alive** | **%** | **dead** | **%** | **Alive** | **%** | **dead** | **%** |
| **Formulation 102** (47 small nymphs (< 1 cm)) | 6 | **12.8** | 41 | **87.2** | 3 | **6.4** | 44 | **93.6** | 1 | **2.1** | 46 | **97.9** |
| **Formulation 102** (18 larger nymphs (> 1 cm)) | 8 | **44.4** | 10 | **55.6** | 3 | **16.7** | 15 | **83.3** | 1 | **5.6** | 17 | **94.4** |

In summary, the two-component ready-to-use kit was highly effective against Schistocerca gregaria adults and Locusta migratoria nymphs when applied either 2 weeks or 3 weeks after its preparation.

### REFERENCES

Halawa, Safaa M., und Reinhold Hustert. "Neural Activity of a Locust Ganglion is Impaired by Limonene and Lovage (Levisticum officinale) Extracts". Journal of Entomology 11, Nr. 1 (1. Januar 2014): 1-13.
Maeno, K. O. et al. (2016) Daily microhabitat shifting of solitarious-phase desert locust adults: implications for meaningful population monitoring. Springerplus 5,107.
McAfee et al. (2018). A death pheromone, oleic acid, triggers hygienic behavior in honey bees (Apis mellifera L.). bioRxiv 231902.
Opender Koul, O. (2011) Microbial biopesticides: opportunities and challenges. CAB Reviews: Perspectives in Agriculture, Veterinary Science, Nutrition and Natural Resources 6, 1-26.
Osman, Eldin I.; Salah & H. Swidan, Mohamed & A. Kheirallah, Dalia & E. Nour, Fatma. (2016). Histological Effects of Essential Oils, Their Monoterpenoids and Insect Growth Regulators on Midgut, Integument of Larvae and Ovaries of Khapra Beetle, Trogoderma granarium Everts. Journal of Biological Sciences. 16. 93-101.
Pimentel, D. (2005) ENVIRONMENTAL AND ECONOMIC COSTS OF THE APPLICATION OF PESTICIDES PRIMARILY IN THE UNITED STATES, Environment, Development and Sustainability, 7: 229-252.
Tripathi, A. K., Upadhyay, S., Bhuiyan, M. & Bhattacharya, P. R. A review on prospects of essential oils as biopesticide in insect-pest management. JPP 1, 052-063 (2009).
Wawrzyniak and Lamparski (2006). Effect of umbelliferae (Apiaceae) plant water extracts on colorado potato beetle (Leptinotarsa decemlineata Say) feeding and development. EJPAU.

## Claims

1. A pesticidal composition, **characterized in that** the composition comprises:
a.) a carrier oil component selected from the group consisting of linseed oil, oils extracted or distilled from chia (*Salvia hispanica*)*,* kiwifruit seeds (*Actinidia chinensis*), perilla (*Perilla frutescens*), lingonberry (*Vaccinium vitis-idaea*), camelina (*Camelina sativa*), purslane (*Portulaca oleracea*), sea buckthorn, walnut, rapeseed, soybean and hemp, and mixtures of the aforementioned oils,
b.) an aqueous solution of hydrogencarbonate, and
c.) a plant essential oil component selected from the group consisting of orange peel oil, mandarin peel oil, mint oil, spearmint oil (*Mentha spicata*), kuromoji oil, ginger grass oil, wintergreen oil, birch oil, black birch oil (*Betulenta lenta*), Spiraea (meadowsweets) oil Polygalaceae oil, hemp seed oil, caraway oil, garden angelica oil (*Angelica archangelica*), lovage extracts, dill seed oil and mixtures thereof.

2. The pesticidal composition according to claim 1, **characterized in that** the aqueous solution of hydrogencarbonate is a saturated aqueous hydrogencarbonate solution.

3. The pesticidal composition according to claim 1 or 2, **characterized in that** the amount of each plant essential oil present in the composition is about 1% to about 6 % in relation to the total volume of the pesticial composition.

4. The pesticidal composition according to any one of claims 1 to 3, **characterized in that** the hydrogencarbonate is selected from at the group consisting of sodium hydrogencarbonate (baking soda), potassium hydrogencarbonate, baking powder and mixtures thereof.

5. The pesticidal composition according to any one of claims 1 to 4, **characterized in that** the carrier oil component essentially consists of linseed oil.

6. The pesticidal composition according to claim 5, **characterized in that** the ratio between the linseed oil and the aqueous solution of hydrogencarbonate is in the range of about 60:40 and about 50:50 parts per volume.

7. The pesticidal composition according to any one of claims 1 to 6, **characterized in that** the plant essential oil component essentially consists of orange peel oil, wintergreen oil, birch oil, caraway oil, and mixtures thereof.

8. The pesticidal composition according to any one of claims 1 to 3, consisting of:
linseed oil,
a saturated aqueous solution of hydrogencarbonate selected from at the group consisting of sodium hydrogencarbonate (baking soda), potassium hydrogencarbonate, baking powder and mixtures thereof, and
and a plant essential oil component selected from the group consisting of orange peel oil, wintergreen oil, birch oil, caraway oil, and mixtures thereof.

9. The pesticidal composition according to claim 7 or 8, **characterized in that** the plant essential oil component essentially consists of a mixture of orange peel oil, wintergreen oil, and caraway oil.

10. The pesticidal composition according to any one of claims 1 to 9, **characterized in that** it is a sprayable pesticidal composition.

11. A kit for an on-site preparation of a sprayable pesticidal composition, the kit comprising:
i. hydrogencarbonate powder,
ii. a carrier oil component selected from the group consisting of linseed oil, oils extracted or distilled from chia (*Salvia hispanica*)*,* kiwifruit seeds (*Actinidia chinensis*), perilla (*Perilla frutescens*), lingonberry (*Vaccinium vitis-idaea*), camelina (*Camelina sativa*), purslane (*Portulaca oleracea*), sea buckthorn, walnut, rapeseed, soybean and hemp, and mixtures of the aforementioned oils, and
iii. a plant essential oil component selected from the group consisting of orange peel oil, mandarin peel oil, mint oil, spearmint oil (*Mentha spicata*), kuromoji oil, ginger grass oil, wintergreen oil, birch oil, black birch oil (*Betulenta lenta*), Spiraea (meadowsweets) oil, Polygalaceae oil, hemp seed oil, caraway oil, garden angelica oil (*Angelica archangelica*), lovage extracts, dill seed oil and mixtures thereof,
and instructions comprising:
• a first preparation step in which the hydrogencarbonate powder (i.) is solved in water to obtain an aqueous solution of hydrogencarbonate for storage until use, and in which the carrier oil component (ii.) and the plant essential oil component (iii.) are mixed to obtain a mixed oil composition for storage until use, and
• a second preparation step in which the aqueous solution of hydrogencarbonate and the mixed oil composition are mixed, preferably in a of ratio 42% and 58%, to obtain a ready-to-use sprayable pesticidal composition.

12. The kit according to claim 11, **characterized in that** the sprayable pesticidal composition is a sprayable pesticidal composition according to claim 10.

13. Use of a pesticidal composition according to any one of claims 1 to 10 or a sprayable pesticidal composition according to claim 11 or 12 for controlling insects from the order Orthoptera.

14. The use according to claim 13 for controlling gregarious locusts including instars (nymphs) and adult gregarious locusts.

15. The use according to claim 14, wherein the gregarious locusts are selected from the species *Locusta migratoria, Schistocerca gregaria, Nomadacris septemfasciata, Locustana pardalina, Calliptamus italicus, Dociostaurus maroccanus, Gastrimargus musicus, Schistocerca picifrons, Schistocerca cancellata, Schistocerca interrita, Coscineuta virens, Patanga succincta, Anacridium melanorhodon, Aiolopus simulatrix, Ceracris kiangsu, Rhammatocerus schistocercoides, Melanoplus sanguinipes, Melanoplus differentialis, Gomphocerus sibricus, Pyrgodera armata, Austroicetes cruciata, Oedaleus senegalensis, Oedaleus australis, Austracris guttulosa* and *Chortoicetes terminifera.*

16. A method for controlling insects from the order Orthoptera, in particular for controlling gregarious locusts, the method comprising applying a pesticidally effective amount of a pesticidal composition according to any one of claims 1 to 10 or a sprayable pesticidal composition according to claim 11 or 12 to a location where control of insects from the order Orthoptera, in particular control of gregarious locusts, is desired.

17. The method according to claim 16, **characterized in that** the pesticidal composition and the sprayable pesticidal composition, respectively, is applied to the location shortly before sunset.

18. The method according to claim 16 or 17, **characterized in that** the pesticidal composition and the sprayable pesticidal composition, respectively, is applied to plants and/or crops present in said location, in particular to leaves of said plants and/or crops.

19. The method according any one of claims 16 to 18, further comprising removing the pesticidal composition and the sprayable pesticidal composition, respectively, from the location after treatment by applying a washing agent selected from the group consisting of: an aqueous solution of hydrogencarbonate selected from the group consisting of sodium hydrogencarbonate (baking soda), potassium hydrogencarbonate, baking powder and mixtures thereof, soapy water or an aqueous acetic acid solution.

20. The method according to any one of claims 16 to 19, **characterized in that** the insects from the order Orthoptera, in particular gregarious locusts, that are knocked down or killed by said method, are collected for further uses.
